# EUROPÄISCHE PATENTANMELDUNG

(11) **EP 1 997 663 A1**
(43) Veröffentlichungstag der Anmeldung: **03.12.2008**
(21) Anmeldenummer: 07010535.8
(22) Anmeldetag: 26.05.2007
(51) Int. Cl.: B60J 11/00

(54) **Schützhülle für ein Fahrzeug**

(71) Anmelder: Ivera H.-P. Rück Textilhandel u. -verarbeitung GmbH, 73230 Kirchheim/Teck (DE)
(72) Erfinder: Rück, Hans-Peter, 73230 Kirchheim/Teck (DE)
(74) Vertreter: Ruckh, Rainer Gerhard

(57) **Zusammenfassung**

Die Erfindung betrifft eine Schutzhülle (1) die ein Fahrzeug vollständig umhüllt. Die Schutzhülle (1) besteht zumindest teilweise aus einem wasserdampfdurchlässigen textilen Material.

## Beschreibung

Die Erfindung betrifft eine Schutzhülle.

Schutzhüllen der in Rede stehenden Art werden in unterschiedlichen Ausprägungen beispielsweise zum Schutz von Kraftfahrzeugen eingesetzt. Dabei stellen diese Schutzhülle insbesondere einen Wetterschutz für im Freien abgestellte Kraftfahrzeuge dar.

Ein Beispiel für eine derartige Schutzhülle ist in der DE 20 2005 008 000 U1 beschrieben. Dort wird eine aufblasbare Garage für Kraftfahrzeuge beschrieben, die aus einer Kunststoff-Folie oder Textilbahn besteht, welche über die Karosserie des Kraftfahrzeugs übergezogen wird, so dass diese die Karosserie seitlich und an der Oberseite umschließt. Dadurch wird ein Schutz gegen Regen, Hagel und Sonneneinstrahlung erhalten.

Aus der DE 10 2005 011 235 A1 ist eine Abdeckplane für Personenkraftwagen bekannt, die aus einer gewebeverstärkten äußeren Schicht und einer inneren Schicht aus Blasenfolie besteht, wobei die beiden Schichten miteinander verbunden sind. Auch diese Abdeckplane wird über die Karosserie übergestülpt und bedeckt somit den oberen Bereich des Personenkraftwagens.

In der US 5,653,492 ist eine Abdeckung für Kraftfahrzeuge beschrieben, die aus mehreren Segmenten besteht und an die Kontur der Karosserie des Kraftfahrzeugs angepasst ist.

Aus der DE 85 13 261 U1 ist eine Schutzabdeckung für ein Kraftfahrzeug bekannt, welches ein metallisiertes, wärmeabstrahlendes Gewebe aufweist. Die Schutzabdeckung umhüllt nur den Karosseriebereich des Kraftfahrzeugs.

Der Erfindung liegt die Aufgabe zugrunde eine Schutzhülle der eingangs genannten Art bereitzustellen, welche eine erweiterte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Schutzhülle umhüllt einen Gegenstand wie ein Fahrzeug vollständig. Die Schutzhülle besteht zumindest teilweise aus einem wasserdampfdurchlässigen textilen Material.

Durch die vollständige Umhüllung des Fahrzeugs oder allgemein auch eines Antriebssystems wie eines Motors oder eine Maschine wird einerseits ein allseitiger Schutz des jeweiligen Gegenstands gegen Verschmutzungen, aber auch gegen Witterungseinflüsse wie Schnee, Regen, Wind und dergleichen erzielt.

Andererseits wird dadurch, dass der Gegenstand in einem durch die Schutzhülle begrenzten geschlossenen Innenraum gelagert ist und dass die Schutzhülle zumindest teilweise, besonders vorteilhaft vollständig aus wasserdampfdurchlässigem Material besteht, erreicht, dass Wasserdampf aus dem Innenraum durch die Schutzhülle nach außen geführt wird. Dadurch wird eine trockene Lagerung des Gegenstands im Innenraum der Schutzhülle gewährleistet und damit ein Korrosionsschutz des Gegenstands erhalten.

Die erfindungsgemäße Schutzhülle kann generell zur korrosionsfreien Lagerung industrieller korrosionsbehafteter Systeme eingesetzt werden, zu welchen generell Maschinen unterschiedlicher Größe und Antriebssysteme wie Motoren insbesondere Verbrennungsmotoren gehören. Allgemein eignet sich die erfindungsgemäße Schutzhülle insbesondere für eine Langzeitlagerung korrosionsanfälligen Gegenständen, besonders von Kraftfahrzeugen, wie insbesondere Oldtimern, wobei die Kraftfahrzeuge von Personenkraftwagen oder Motorrädern oder sogar Lastwagen gebildet sein können.

Gerade bei hochwertigen Kraftfahrzeugen wie insbesondere Oldtimern besteht ein generelles Problem darin, diese besonders sorgfältig gegen Verschleiß zu schützen, wobei die Gefahr von Korrosion des Fahrzeugs generell gegeben ist, wenn das Kraftfahrzeug im Freien bewegt wird. Auch bei guter Pflege werden nach einer Fahrt im Freien mit dem Kraftfahrzeug bei regnerischem Wetter noch Wasserreste am Fahrzeug verbleiben. Wird das Fahrzeug dann in der erfindungsgemäßen Schutzhülle gelagert, so entsteht im geschlossenen, durch die Schutzhülle begrenzten Innenraum ein Überdruck an Wasserdampf der üblicherweise einhergeht mit einem Temperaturgefälle derart, dass die Temperatur im Innenraum der Schutzhülle größer ist als außerhalb. Diese Effekte bewirken, dass im Innenraum existierender Wasserdampf durch die wasserdampfdurchlässige Schutzhülle nach außen gefördert wird. Dies wiederum bewirkt, dass der Innenraum des Kraftfahrzeugs trocken ist, so dass das Kraftfahrzeug im Innern gegen Korrosion geschützt gelagert wird.

Das Fahrzeug, insbesondere das Kraftfahrzeug kann generell über eine Öffnung in das Innere der Schutzhülle eingeführt werden, wobei die Öffnung mit Verschlussmitteln reversibel abschließbar ist, das heißt die Verschlussmittel können mehrfach betätigt, das heißt geschlossen werden. Dabei schließen die Verschlussmittel generell eine Nahtlinie zwischen Segmenten dicht ab.

In einer besonders vorteilhaften Ausführungsform der Erfindung ist die Schutzhülle zweiteilig ausgebildet und besteht aus einem Bodenteil und einem Oberteil. In diesem Fall kann ein Fahrzeug, insbesondere ein Kraftfahrzeug, besonders einfach in der Schutzhülle untergebracht werden, indem dieses zunächst auf das Bodenteil, das auf einer Unterlage wie einem Boden aufliegt, aufgefahren wird, wonach dann das Oberteil über das Fahrzeug gestülpt wird, um dann mit dem Verschlussmittel das Oberteil mit dem Bodenteil zu verbinden.

Die Schutzhülle besteht zumindest teilweise aus wasserdampfdurchlässigem Material, wobei dessen Anteil an der Schutzhülle möglichst groß ist, um so möglichst schnell und effizient Wasserdampf aus dem Innenraum der Schutzhülle nach außen zu führen. Besonders vorteilhaft besteht die Schutzhülle vollständig, das heißt über ihre gesamte Fläche mit Ausnahme der Verschlussmittel, aus wasserdampfdurchlässigem Material.

Generell ist die Schutzhülle zwar wasserdampfdurchlässig, jedoch wasserabweisend, so dass Wasserdampf aus dem Innern der Schutzhülle austreten kann, jedoch kein Wasser über die Schutzhülle in den Innenraum gelangen kann. Weiterhin bietet die Schutzhülle natürlich einen Schutz gegen Verschmutzungen.

Als Materialien zur Ausbildung der Schutzhülle eignen sich generell textile Materialien, bevorzugt Gewebe. Dabei können die textilen Materialien insbesondere aus Acryl oder Polyester bestehen. Derartige textile Gewebe weisen eine geringe Eigensteifigkeit auf und können so leicht über das zu umhülllende Fahrzeug gestülpt werden. Weiterhin kann die aus den textilen Materialien bestehende Schutzhülle nach Gebrauch zusammengelegt werden und so platzsparend gelagert werden.

Die Erfindung wird im Nachstehenden anhand der Zeichnungen erläutert. Es zeigen:
- Figur 1:: Schematische Darstellung eines innerhalb einer Schutzhülle gelagerten Kraftfahrzeugs.
- Figur 2:: Draufsicht auf das Bodenteil der Schutzhülle gemäß Figur 1.
- Figur 3:: Seitenansicht des Oberteils der Schutzhülle gemäß Figur 1.

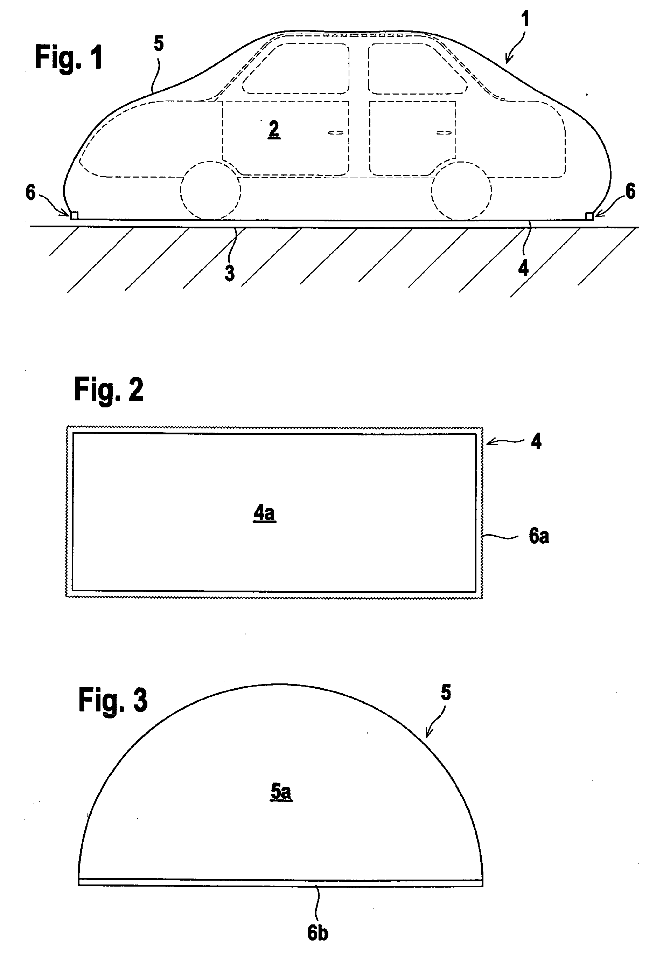

In Figur 1 ist schematisch eine Schutzhülle 1 für ein Fahrzeug dargestellt. Das Fahrzeug ist im vorliegenden Fall von einem Kraftfahrzeug 2, spezifisch einem Personenkraftwagen gebildet. Das Kraftfahrzeug 2 ist auf dem Boden 3 eines Gebäudes, eines Hofes eines Parkplatzes oder dergleichen abgestellt. Generell können mit der Schutzhülle 1 auch andere Fahrzeuge, insbesondere auch Kraftfahrzeuge 2 wie Motorräder und dergleichen geschützt werden. Auch ist mit der Schutzhülle 1 eine Lagerung von Maschinen, Motoren und dergleichen möglich. Die Schutzhülle 1 umhüllt, wie in Figur 1 schematisch dargestellt, das Kraftfahrzeug 2 vollständig, das heißt die Schutzhülle 1 bildet eine geschlossene Fläche, so dass der Innenraum, der von der Schutzhülle 1 begrenzt ist, vollständig abgeschlossen ist.

Die Schutzhülle 1 ist wasserabweisend, vorzugsweise wasserdicht, so dass kein Wasser die Schutzhülle 1 durchdringen kann, das heißt es kann von außen kein Wasser in den von der Schutzhülle 1 begrenzten Innenraum eindringen. Ebenso ist die Schutzhülle 1 schmutzabweisend, das heißt ein Eindringen von Schmutz in den Innenraum ist ebenfalls ausgeschlossen. Jedoch besteht die Schutzhülle 1 aus einem wasserdampfdurchlässigem Material. Damit wird im Innenraum vorhandener Wasserdampf aus dem Innenraum über die Schutzhülle 1 ausgeleitet, so dass das Kraftfahrzeug 2 trocken gelagert ist.

Die Schutzhülle 1 gemäß Figur 1 ist zweiteilig ausgebildet und besteht aus einem Bodenteil 4 und einem Oberteil 5. Das Bodenteil 4 ist in einer Draufsicht in Figur 2 dargestellt. Das Oberteil 5 ist in einer Seitenansicht dargestellt.

Sowohl das Bodenteil 4 als auch das Oberteil 5 bestehen im Wesentlichen aus einer textilen Fläche 4a, 5a, die als Gewebe ausgebildet sind. Die textilen Flächen 4a, 5a sind jeweils vollständig aus einem wasserdampfdurchlässigen Material gebildet, das gleichzeitig wasserabweisend ist.

Das Bodenteil 4 besteht aus einer textilen Fläche 4a mit einer größeren Dicke, so dass diese eine erhöhte Stabilität und eine gewisse Eigensteifigkeit aufweist. Bevorzugt besteht das Bodenteil 4 aus einem Gewebe aus Acryl. Das so ausgebildete wasserdampfdurchlässige Gewebe kann zusätzlich eine wasserabweisende Beschichtung aufweisen.

Das Oberteil 5 ist im Wesentlichen haubenförmig ausgebildet. Es besteht aus einer textilen Fläche 5a, die eine geringere Dicke als die textile Fläche 4a des Bodenteils 4 aufweist. Das Oberteil 5 weist so eine erhöhte Flexibilität auf und eine geringe Eigensteifigkeit auf. Bevorzugt besteht das Oberteil 5 aus einem Gewebe aus Polyester. Das so ausgebildete wasserdampfdurchlässige Gewebe kann wiederum zusätzlich eine wasserabweisende Beschichtung aufweisen.

Um mit dem Bodenteil 4 und dem Oberteil 5 eine den Innenraum komplett abschließende Schutzhülle 1 zu realisieren, sind an dem Bodenteil 4 und dem Oberteil 5 Verschlussmittel vorgesehen um die beiden Teile miteinander zu verbinden. Im vorliegenden Fall ist als Verschlussmittel ein Reißverschluss 6 vorgesehen, wobei eine erste Verschlussleiste 6a des Reißverschlusses 6 entlang des Randes des im Wesentlichen rechteckförmigen Bodenteils 4 umläuft. Die zweite Verschlussleiste 6b des Reißverschlusses 6 läuft entlang des unteren Randes des Oberteils 5 um. Dementsprechend sind die Randkontur des Bodenteils 4 und die Kontur des unteren Randes des Oberteils 5 aneinander ange-passt, so dass die beiden Verschlussleisten 6a, 6b gleich lang und identisch ausgebildet sind. Generell sind zur Verbindung des Bodenteils 4 und Oberteils 5 reversible Verschlussmittel, das heißt Verschlussmittel die mehrfach geöffnet und geschlossen werden können, vorgesehen. Anstelle von Reißverschlüssen können auch Gleitverschlüsse, Klettverschlüsse, Druckverschlüsse mit Druckknopfleisten oder dergleichen eingesetzt werden.

Generell können auch mehrere Verschlussmittel vorgesehen sein, beispielsweise dann, wenn das haubenförmige Oberteil 5 mehrteilig ausgebildet ist, so dass dann die Segmente des Oberteils 5 mittels der weiteren Verschlussmittel verbunden werden können.

Um das Kraftfahrzeug 2 wie in Figur 1 dargestellt mit der Schutzhülle 1 zu umhüllen, wird in einem ersten Schritt das Bodenteil 4 eben auf dem Boden 3 ausgelegt. Dann wird das Kraftfahrzeug 2 auf das Bodenteil 4 aufgefahren. Die Querschnittsfläche des Bodenteils 4 ist so an die Größe des Kraftfahrzeugs 2 angepasst, dass der Randbereich des Bodenteils 4 mit der Verschlussleiste 6a, 6b bei aufgefahrenem Bodenteil 4 noch freiliegt. Da das Bodenteil 4 eine größere Dicke und damit größere Stabilität und Eigensteifigkeit aufweist, ist gewährleistet, dass das Bodenteil 4 bei Auffahren des Kraftfahrzeugs 2 nicht beschädigt wird. Durch die Eigensteifigkeit des Bodenteils 4 werden auch unerwünschte Faltenbildungen des Bodenteils 4 bei Auffahren des Kraftfahrzeugs 2 vermieden.

In einem zweiten Schritt wird das Oberteil 5 über das Kraftfahrzeug 2 gestülpt und dann seitlich am Kraftfahrzeug 2 abwärts gezogen, bis der untere Rand des Oberteils 5 dem Rand des Bodenteils 4 gegenüber liegt, so dass dann der Reißverschluss 6 durch Verbinden der Verschlussleisten 6a, 6b geschlossen werden kann. Da das Oberteil 5 eine kleinere Dicke und damit geringere Eigensteifigkeit als das Bodenteil 5 aufweist, kann es leicht und schnell über das Kraftfahrzeug 2 gestülpt werden.

Der untere Rand des Oberteils 5 kann durch das Verschlussmittel selbst oder eine Randeinfassung beschwert sein, damit das Oberteil 5 besser über das Kraftfahrzeug 2 gestülpt werden kann.

Insbesondere für die Lagerung größerer Kraftfahrzeuge 2 kann es die Montage der Schutzhülle 1 vereinfachen, wenn diese mehrteilig ausgebildet ist.

Wird das Kraftfahrzeug 2 wieder benötigt, kann die Schutzhülle 1 in umgekehrter Reihenfolge abgebaut werden, das heißt nach Lösen des Verschlussmittels wird das Oberteil 5 der Schutzhülle 1 vom Kraftfahrzeug 2 abgenommen, so dass dann das Kraftfahrzeug 2 vom Bodenteil 4 weggefahren werden kann.

### Bezugszeichenliste

- (1): Schutzhülle
- (2): Kraftfahrzeug
- (3): Boden
- (4): Bodenteil
- (4a): textile Fläche
- (5): Oberteil
- (5a): textile Fläche
- (6): Reißverschluss
- (6a): Verschlussleiste
- (6b): Verschlussleiste

## Patentansprüche

1. Schutzhülle für ein Fahrzeug, **dadurch gekennzeichnet, dass** mit dieser das Fahrzeug vollständig umhüllbar ist, und dass diese zumindest teilweise aus einem wasserdampfdurchlässigen textilen Material besteht.

2. Schutzhülle nach Anspruch 1, **dadurch gekennzeichnet, dass** diese vollständig aus wasserdampfdurchlässigem textilem Material besteht.

3. Schutzhülle nach einem der Ansprüche 1 oder 2, **dadurch gekennzeichnet, dass** diese eine Öffnung aufweist, die mit Verschlussmitteln reversibel verschließbar ist.

4. Schutzhülle nach Anspruch 3, **dadurch gekennzeichnet, dass** diese ein Bodenteil (4), auf welches das Fahrzeug auffahrbar ist, und ein Oberteil (5) aufweist, welche über die Verschlussmittel verbindbar sind.

5. Schutzhülle nach einem der Ansprüche 3 oder 4, **dadurch gekennzeichnet, dass** als Verschlussmittel Reißverschlüsse (6), Gleitverschlüsse, Klettverschlüsse, Druckverschlüsse oder Kombinationen hiervon vorgesehen sind.

6. Schutzhülle nach einem der Ansprüche 1 bis 5, **dadurch gekennzeichnet, dass** das textile Material wasserabweisend ist.

7. Schutzhülle nach einem der Ansprüche 1 bis 6, **dadurch gekennzeichnet, dass** das textile Material eine wasserabweisende Beschichtung aufweist.

8. Schutzhülle nach einem der Ansprüche 1 bis 7, **dadurch gekennzeichnet, dass** das textile Material ein Gewebe ist.

9. Schutzhülle nach einem der Ansprüche 1 bis 8, **dadurch gekennzeichnet, dass** das textile Material aus Acryl und/oder Polyester besteht.

10. Schutzhülle nach einem der Ansprüche 1 bis 9, **dadurch gekennzeichnet, dass** mit dieser anstelle eines Fahrzeugs eine Maschine oder ein Antriebssystem umhüllbar ist.
